# EUROPEAN PATENT APPLICATION

(11) **EP 4 538 953 A1**
(43) Date of publication of application: **16.04.2025**
(21) Application number: 24020302.6
(22) Date of filing: 09.10.2024
(51) Int. Cl.: G06Q 30/0251, G06V 10/82, G06V 20/52, G06V 40/16

(54) **SYSTEM AND RELATED METHODS FOR REAL-TIME CONTEXT-AWARE TARGETED ADVERTISING SYSTEM USING NEURAL NETWORKS AND OBJECT RECOGNITION IN PUBLIC SPACES**

(30) Priority: 10.10.2023 GB 202315521; 10.10.2023 US 202318378177
(71) Applicant: Bobrov, Anton, 09306 Vilnius (LT)
(72) Inventor: Bobrov, Anton, 09306 Vilnius (LT)

(57) **Abstract**

The invention provides a system for real-time, context-aware targeted advertising in public spaces. Utilizing a combination of neural networks, object recognition software, and a hardware setup of cameras and display screens, the system identifies specific objects in the vicinity. Based on this real-time data, the system selects and displays advertisements that are most relevant to the individuals present. Advanced versions integrate facial recognition and online data analysis for more precise targeting. The system offers advertisers the ability to reach their intended audience more effectively while minimizing intrusion on those not interested in the displayed content.

## Description

### Field of Invention.

The present invention pertains to the field of targeted advertising. Specifically, it relates to a system that employs neural networks and object recognition technologies to display relevant advertisements in real-time in public locations.

### Background

In the realm of targeted advertising, traditional methods often rely on digital footprints left by users on websites, social media platforms, and search engines. These methods, while effective to some extent, are confined to the digital sphere and fail to account for real-time, physical interactions and preferences. Additionally, they often require extensive data collection and tracking, raising concerns about user privacy and data security.

Current systems that attempt to bridge the gap between the digital and physical worlds, such as billboards equipped with basic sensors or QR codes, fall short in several ways. Firstly, they lack the capability to adapt in real-time to the dynamic nature of public spaces. For example, a billboard displaying an advertisement for pet food is irrelevant to a passerby without a pet, thus constituting a missed opportunity for both the advertiser and potential consumers interested in other products. Secondly, these systems are often intrusive, requiring users to scan a code or interact with a device, disrupting the flow of their daily activities.

Moreover, existing solutions that employ cameras and display screens in public places are rudimentary at best. They may rely on simple metrics like crowd density but lack the sophistication to identify specific objects or attributes that could provide valuable context for ad targeting. As a result, the advertising content displayed tends to be generic and may not effectively engage the intended audience.

Furthermore, while some advanced systems have begun to integrate facial recognition technologies, these often raise ethical and privacy concerns. They also tend to focus on identifying individuals rather than understanding the context in which they appear, such as the objects they are interacting with, which could offer additional layers of valuable information for advertisers.

KR20220023571A describes an advertisement playback control method performed by a computing device capable of communicating with a camera installed toward a first area on a sidewalk and a display device installed toward a second area on the sidewalk is described. An exemplary advertisement playback control method comprises: an image reception step of receiving image data including a plurality of pedestrians in a first area from a camera; a target selection step of selecting one or more pedestrians to move to the second area from among the pedestrians; a characteristic information derivation step of deriving pedestrian characteristic information for each of the selected one or more pedestrians; a statistical data generation step of generating statistical data by integrating pedestrian characteristic information; a content determination step of determining one or more advertisement content on the basis of the statistical data; a setting step of determining display settings including time settings for displaying advertisement content; and an advertisement playback step of causing the display device to display advertisement content according to the display settings.

Current systems for targeted advertising in public spaces are limited by their lack of real-time adaptability, their level of ability to effectively target recognized individuals, and their inability to effectively bridge the digital and physical realms. These limitations necessitate the development of a more sophisticated solution capable of real-time object recognition and context-aware ad display, while also addressing the privacy concerns inherent in such technologies. It is within this context that the present invention is provided.

### Summary

The present invention overcomes the aforementioned limitations by providing a system for real-time, context-aware targeted advertising in public spaces.

The system employs a combination of neural networks and object recognition software, integrated with a hardware setup consisting of cameras and display screens. The core functionality involves identifying specific objects within the camera's field of view and displaying corresponding advertisements that are relevant to the individuals in the vicinity. The system operates in three primary modes: object-based targeting, facial recognition with online data analysis, and a hybrid method combining both. The invention aims to enhance the effectiveness of advertising efforts by ensuring that displayed content is pertinent to the target audience, while also minimizing the display of irrelevant ads to others. Advanced versions of the system offer further refinement in targeting by incorporating facial recognition and online data analytics. Overall, the invention provides a sophisticated yet user-friendly platform for advertisers and offers a less intrusive advertising experience for the public.

Thus, according to a first aspect of the present disclosure, there is provided a system for targeted advertising in public spaces, comprising: one or more camera devices positioned in a first location, configured to capture visual data; one or more display devices situated in the same first location, configured to display audiovisual content; one or more databases configured to store a plurality of advertisements and user profiles; one or more servers communicatively coupled to said one or more camera devices and said one or more display devices.

The one or more servers comprise a neural network model configured to: receive the visual data from the one or more camera devices; identify one or more objects within the received visual data based on pre-defined criteria; match the identified one or more objects with corresponding advertisements stored in the one or more databases; and transmit the matched advertisements to the one or more display devices for playback; wherein the neural network model is trained to recognize and identify different visual objects associated with the plurality of advertisements stored in the one or more databases.

In some embodiments, the one or more servers further comprise facial recognition software configured to identify faces within the received visual data.

The facial recognition software may be further configured to match identified faces with user profiles stored in the one or more databases, said profiles containing online data including but not limited to social media activity and publicly indicated preferences.

The neural network model may be further configured to analyze the online data associated with the identified faces to refine the selection of advertisements for display.

Furthermore, in embodiments with facial recognition, the system may also comprise one or more projector devices, and the one or more servers may be configured, in addition to transmitting the matched advertisements, to cause the one or more projector devices to project one or more predefined directional symbols onto a surface of the first location to direct the identified user to an advertised product based on their online data.

The one or more projector devices may also be further configured to project the matched advertisements onto a surface of the first location.

Additionally, in embodiments with facial recognition, the system may further comprise one or more store manager user devices, and the one or more servers may be configured, in addition to transmitting the matched advertisements, to share at least a portion of the data for the identified user profile with the one or more store manager user devices.

The data transmitted to the one or more store manager user devices may comprise at least one or more product suggestions for the identified user profile.

In some embodiments, the one or more servers are further configured to create a temporary user profile for recognized persons, said temporary user profile being stored in the one or more databases for a predetermined period.

The temporary user profile and the recognized facial image may serve as an identifier for targeted advertising, and the duration of storage is determined by the advertiser.

In some embodiments, the one or more servers are configured to operate in one of three modes: object-based targeting, facial recognition with online data analysis, and a hybrid method combining both.

In some embodiments, the one or more databases further store analytics data for manufacturers and distributors, enabling the tracking of specific objects or brands.

In some embodiments, the one or more camera devices and one or more display devices are integrated into a network of partners, said partners comprising entities with built-in camera TVs and entities with additional equipment with cameras.

In some embodiments, the one or more camera devices are configured to transmit their video signal to the one or more servers for real-time data processing and analysis.

In some embodiments, the neural network model is trained using a photo database or a ready-made trained model.

In some embodiments, the pre-defined criteria for object identification are set by the advertiser.

In some embodiments, the one or more display devices are LCD TVs or monitors situated in shopping centers, shops, or storefronts.

In some embodiments, the one or more servers are configured to transmit the matched advertisements to the one or more display devices for playback in real-time upon object identification.

### Brief Description of the Drawings

Various embodiments of the invention are disclosed in the following detailed description and accompanying drawings.
FIG.1 depicts the process flow diagram outlining the various phases and optional features of the method.
FIG.2 shows the system architecture, detailing the components and their interconnections, including camera devices, display devices, servers, and databases.
FIG.3 provides an example data flow of the method being carried out by the system, illustrating the sequence of operations from data capture to advertisement display.

Common reference numerals are used throughout the figures and the detailed description to indicate like elements. One skilled in the art will readily recognize that the above figures are examples and that other architectures, modes of operation, orders of operation, and elements/functions can be provided and implemented without departing from the characteristics and features of the invention, as set forth in the claims.

### Detailed Description and Preferred Embodiment

The following is a detailed description of exemplary embodiments to illustrate the principles of the invention. The embodiments are provided to illustrate aspects of the invention, but the invention is not limited to any embodiment. The scope of the invention encompasses numerous alternatives, modifications and equivalent; it is limited only by the claims.

Numerous specific details are set forth in the following description in order to provide a thorough understanding of the invention. However, the invention may be practiced according to the claims without some or all of these specific details. For the purpose of clarity, technical material that is known in the technical fields related to the invention has not been described in detail so that the invention is not unnecessarily obscured.

### DEFINITIONS:

The terminology used herein is for the purpose of describing particular embodiments only and is not intended to be limiting of the invention.

As used herein, the term "and/or" includes any combinations of one or more of the associated listed items.

As used herein, the singular forms "a," "an," and "the" are intended to include the plural forms as well as the singular forms, unless the context clearly indicates otherwise.

It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

The terms "first," "second," and the like are used herein to describe various features or elements, but these features or elements should not be limited by these terms. These terms are only used to distinguish one feature or element from another feature or element. Thus, a first feature or element discussed below could be termed a second feature or element, and similarly, a second feature or element discussed below could be termed a first feature or element without departing from the teachings of the present disclosure.

### DESCRIPTION OF DRAWINGS

The following detailed description provides an in-depth explanation of a system designed to revolutionize the field of targeted advertising in public spaces. Traditional methods of advertising often lack the capability to adapt in real-time to the dynamic nature of public environments. The present invention addresses these limitations by employing a unique combination of neural networks, object recognition software, and a hardware arrangement of cameras and display screens. This system is capable of identifying specific objects or attributes in real-time, thereby enabling the display of advertisements that are highly relevant to the individuals present in a given location. While the basic version of the system focuses on object recognition, more advanced versions incorporate facial recognition and online data analysis to further refine the targeting process. This detailed description will elucidate the various components, methods of operation, and potential applications of the invention, providing a comprehensive understanding of its functionalities and advantages.

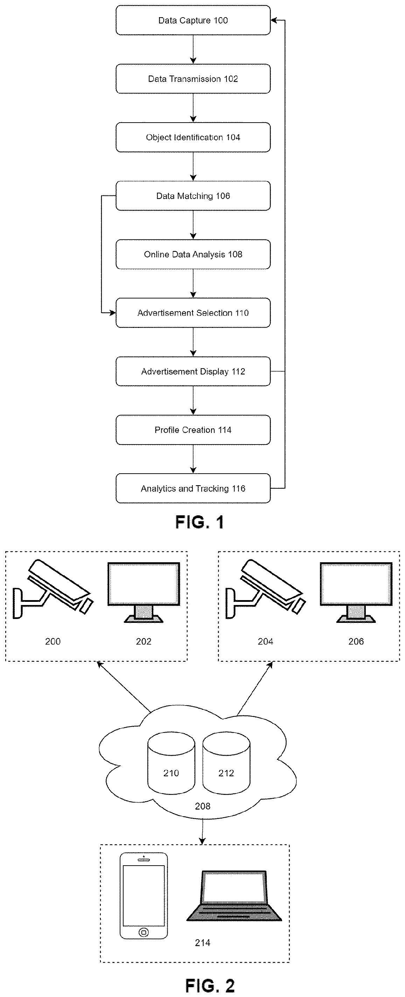

Referring to FIG.1, the process flow diagram outlines the method employed by the system for targeted advertising in public spaces. The method begins with the Data Capture Phase 100, where one or more camera devices capture visual data. Optionally, facial recognition software can also capture face data at this stage.

Following the capture, the Data Transmission Phase 102 takes place. In this phase, the visual data, and optionally the face data, are transmitted to one or more servers for further processing.

Upon receiving the data, the Object Identification Phase 104 is initiated. A neural network model residing on the server identifies objects within the visual data based on pre-defined criteria. Optionally, facial recognition software identifies faces within the received data.

The method then proceeds to the Data Matching Phase 106. The server matches the identified objects with pre-defined criteria for displaying advertisements. If facial recognition is employed, identified faces are matched with existing user profiles stored in one or more databases.

If no face is matched, or facial recognition is not performed, the methos proceeds to step 110.

If a face is detected and recognised, an Online Data Analysis Phase 108 is activated. The server fetches online data associated with the identified faces, and the neural network model analyzes this data to provide additional context for advertisement selection.

The Advertisement Selection Phase 110 follows, where the server matches the identified objects and, optionally, the analyzed online data with corresponding advertisements stored in the database.

Once the advertisements are selected, the Advertisement Display Phase 112 is initiated. The matched advertisements are transmitted to one or more display devices situated in the same location as the camera devices, and audiovisual content is played back on these display devices.

If no specific person was identified, the method then returns to the data capture phase 100.

If a person was identified through fascial recognition, a Profile Creation Phase 114 occurs. A temporary user profile is created for recognized persons and stored in the database with a predetermined expiration time, set by the advertiser.

Finally, an Analytics and Tracking Phase 116 is included. Analytics data are collected for tracking specific objects or brands, and this data is stored for future access by manufacturers and distributors.

The method then returns to the data capture phase 100.

Referring to FIG.2, the system architecture for implementing the disclosed methods is depicted. The architecture includes a first set of camera devices 200 and a first set of display devices 202 situated in a first location. Similarly, a second set of camera devices 204 and a second set of display devices 206 are positioned in a second location. Both sets of camera and display devices are in communication with a cloud network architecture 208.

Within the cloud network architecture 208, a set of servers 210 is present, running neural network models capable of object detection and analysis. These servers 210 are configured to receive visual data from both the first and second sets of camera devices 200, 204 and to transmit audiovisual content to the corresponding first and second sets of display devices 202, 206. The servers 210 are also equipped to perform optional facial recognition and online data analysis, as described in the advanced versions of the system.

Also part of the cloud network architecture 208 is a set of databases 212. These databases are configured for storing a variety of data including user profiles and advertisements. The servers 210 access these databases 212 to retrieve relevant advertisements and user data for the purpose of targeted advertising.

The system architecture further comprises a set of user devices 214, which are in communication with the cloud network architecture 208. These user devices 214 are capable of interfacing with a platform for advertisers. This platform allows users, typically advertisers, to select target audiences and determine the criteria for which advertisements are displayed in response to specific detected objects or faces.

The servers 210 are responsible for real-time data processing and analysis. They match the identified objects or faces with the corresponding advertisements stored in the databases 212 and determine what content to display on the first and second sets of display devices 202, 206. In the advanced versions, the servers 210 also create temporary user profiles for recognized persons, storing these profiles in the databases 212 for a predetermined period as set by the advertiser.

The system architecture is designed to be scalable and can be deployed in various public locations such as shopping centers and storefronts. It is capable of operating in different modes including object-based targeting, facial recognition with online data analysis, and a hybrid method combining both. This architecture serves as the backbone for implementing the methods of targeted advertising as disclosed.

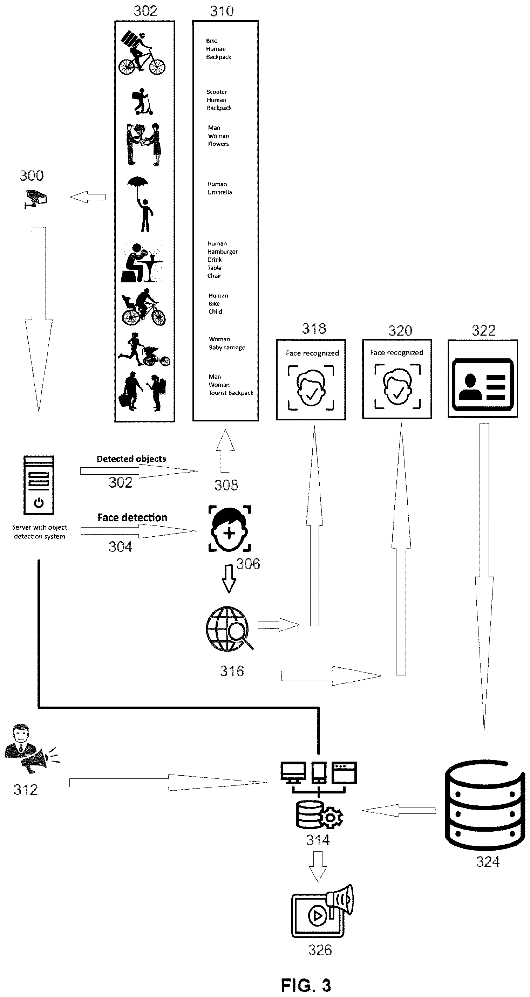

Referring to FIG.3, an example data flow of the method being carried out by the system is illustrated.

The data flow begins with the camera devices 300 capturing visual data in a public location. This visual data may include various objects 302 such as clothing, accessories, and other items that people may carry or wear. Facial recognition software may also capture face data 304 at this stage.

Once captured, the visual and optional face data are transmitted to the servers 306 for processing. These servers 306 run neural network models designed for object identification and, if applicable, facial recognition. Upon receiving the data, the servers initiate the process of object identification 308. The neural network model identifies objects 310 within the visual data based on pre-defined criteria.

Following identification, the servers proceed to match the identified objects and faces with pre-defined criteria for displaying advertisements. These criteria are typically set by advertisers 312 and stored in the databases connected to a user platform 314 where the advertisers can set target audiences, the advertisements to be played, and the criteria for playing each advertisement. The advertiser can also provide a set of images to train the neural network model, such as images of their product or competitor products.

When facial recognition is employed, the servers 306 also search the internet 316 to match the identified faces with existing user profiles, such as on social media, in public and non-public photos, assuming user permission.

If a recognized user is successfully matches, the servers 306 then fetch online data associated with the identified faces. This online data may include social media activity and associate data 318, including publicly indicated preferences, and other publicly available information. For example, the servers may search Linkedln, Facebook, and other platforms to identify employment data, education, hobbies, nationality, age, etc. The neural network model analyzes this data to provide additional context for advertisement selection.

The servers may also perform image analysis 320 on available images of the user, including recognition of objects surrounding a user in said images such as backpacks, bicycles, personal accessories etc, and can also recognize environments to help determine user interests, for example the servers may determine that the user works in an office, the type of house they live in, or specific types of outdoor environments they are active in (mountains, sea, forest, etc).

After the analysis, the servers match the identified objects and, if applicable, the analyzed online data with corresponding advertisements stored in the databases. The servers then determine which advertisements to display based on this matching process.

The servers may also create a temporary user profile for recognized persons 322. This profile is stored in a database 324 with a predetermined expiration time, which is set by the advertiser. The temporary user profile uses the face of the person as an identifier for targeted advertising during its period of validity, and may be accessible through the platform .

Finally, the servers transmit the selected advertisements to the display devices 326 situated in the same location as the camera devices. The display devices then play back the selected audiovisual content, completing the data flow process.

In embodiments as described above where facial recognition and identification of user preferences is incorporated, the system may also comprise one or more projector devices, such as for example gobo projectors.

These projectors serve a dual purpose. First, they can project predefined directional symbols, such as arrows or other indicators, onto surfaces within the first location. These symbols guide the identified user toward an advertised product or location based on their online data and profile. Second, the projectors can also display the matched advertisements directly onto surfaces within the location, offering an alternative to traditional display screens.

The system may also include functionality to communicate with store manager user devices. In such configurations, the servers can transmit a portion of the identified user's profile data to these devices. This data may include product suggestions based on the user's profile, thereby enabling store managers or consultants to offer more targeted service. When an identified individual approaches a store counter or other designated area equipped with an additional camera, the temporary profile information is shared with the store manager's device. This facilitates targeted communication between the store consultant and the visitor, offering a new form of offline targeting.

Furthermore, the system can guide individuals through public spaces like shopping centers using special gobo projectors that project directional indicators onto the floor or walls. These indicators are determined based on the same object detection and facial recognition analysis that informs the targeted advertising. As the individual moves through the space, passing by cameras, the system updates the directional guidance provided by the gobo projectors. This serves as a form of real-time navigation, directing the individual toward locations that align with their interests as indicated in their profile.

### NETWORK COMPONENTS

A server as described herein can be any suitable type of computer. A computer may be a uniprocessor or multiprocessor machine. Accordingly, a computer may include one or more processors and, thus, the aforementioned computer system may also include one or more processors. Examples of processors include sequential state machines, microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), gated logic, programmable control boards (PCBs), and other suitable hardware configured to perform the various functionality described throughout this disclosure.

Additionally, the computer may include one or more memories. Accordingly, the aforementioned computer systems may include one or more memories. A memory may include a memory storage device or an addressable storage medium which may include, by way of example, random access memory (RAM), static random access memory (SRAM), dynamic random access memory (DRAM), electronically erasable programmable read-only memory (EEPROM), programmable read-only memory (PROM), erasable programmable read-only memory (EPROM), hard disks, floppy disks, laser disk players, digital video disks, compact disks, video tapes, audio tapes, magnetic recording tracks, magnetic tunnel junction (MTJ) memory, optical memory storage, quantum mechanical storage, electronic networks, and/or other devices or technologies used to store electronic content such as programs and data. In particular, the one or more memories may store computer executable instructions that, when executed by the one or more processors, cause the one or more processors to implement the procedures and techniques described herein. The one or more processors may be operably associated with the one or more memories so that the computer executable instructions can be provided to the one or more processors for execution. For example, the one or more processors may be operably associated to the one or more memories through one or more buses. Furthermore, the computer may possess or may be operably associated with input devices (e.g., a keyboard, a keypad, controller, a mouse, a microphone, a touch screen, a sensor) and output devices such as (e.g., a computer screen, printer, or a speaker).

The computer may advantageously be equipped with a network communication device such as a network interface card, a modem, or other network connection device suitable for connecting to one or more networks.

A computer may advantageously contain control logic, or program logic, or other substrate configuration representing data and instructions, which cause the computer to operate in a specific and predefined manner as, described herein. In particular, the computer programs, when executed, enable a control processor to perform and/or cause the performance of features of the present disclosure. The control logic may advantageously be implemented as one or more modules. The modules may advantageously be configured to reside on the computer memory and execute on the one or more processors. The modules include, but are not limited to, software or hardware components that perform certain tasks. Thus, a module may include, by way of example, components, such as, software components, processes, functions, subroutines, procedures, attributes, class components, task components, object-oriented software components, segments of program code, drivers, firmware, micro code, circuitry, data, and/or the like.

The control logic conventionally includes the manipulation of digital bits by the processor and the maintenance of these bits within memory storage devices resident in one or more of the memory storage devices. Such memory storage devices may impose a physical organization upon the collection of stored data bits, which are generally stored by specific electrical or magnetic storage cells.

The control logic generally performs a sequence of computer-executed steps. These steps generally require manipulations of physical quantities. Usually, although not necessarily, these quantities take the form of electrical, magnetic, or optical signals capable of being stored, transferred, combined, compared, or otherwise manipulated. It is conventional for those skilled in the art to refer to these signals as bits, values, elements, symbols, characters, text, terms, numbers, files, or the like. It should be kept in mind, however, that these and some other terms should be associated with appropriate physical quantities for computer operations, and that these terms are merely conventional labels applied to physical quantities that exist within and during operation of the computer based on designed relationships between these physical quantities and the symbolic values they represent.

It should be understood that manipulations within the computer are often referred to in terms of adding, comparing, moving, searching, or the like, which are often associated with manual operations performed by a human operator. It is to be understood that no involvement of the human operator may be necessary, or even desirable. The operations described herein are machine operations performed in conjunction with the human operator or user that interacts with the computer or computers.

It should also be understood that the programs, modules, processes, methods, and the like, described herein are but an exemplary implementation and are not related, or limited, to any particular computer, apparatus, or computer language. Rather, various types of general-purpose computing machines or devices may be used with programs constructed in accordance with some of the teachings described herein. In some embodiments, very specific computing machines, with specific functionality, may be required.

Unless otherwise defined, all terms (including technical terms) used herein have the same meaning as commonly understood by one having ordinary skill in the art to which this invention belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

The disclosed embodiments are illustrative, not restrictive. While specific configurations of the system and related methods have been described in a specific manner referring to the illustrated embodiments, it is understood that the present invention can be applied to a wide variety of solutions which fit within the scope and spirit of the claims. There are many alternative ways of implementing the invention.

It is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A system for targeted advertising in public spaces, comprising:
one or more camera devices positioned in a first location, configured to capture visual data;
one or more display devices situated in the same first location, configured to display audiovisual content;
one or more databases configured to store a plurality of advertisements and user profiles;
one or more servers communicatively coupled to said one or more camera devices and said one or more display devices, said servers comprising a neural network model configured to:
receive the visual data from the one or more camera devices;
identify one or more objects within the received visual data based on pre-defined criteria;
match the identified one or more objects with corresponding advertisements stored in the one or more databases; and
transmit the matched advertisements to the one or more display devices for playback;
wherein the neural network model is trained to recognize and identify different visual objects associated with the plurality of advertisements stored in the one or more databases.

2. The system of Claim 1, wherein the one or more servers further comprise facial recognition software configured to identify faces within the received visual data.

3. The system of Claim 2, wherein the facial recognition software is further configured to match identified faces with user profiles stored in the one or more databases, said profiles containing online data including but not limited to social media activity and publicly indicated preferences.

4. The system of Claim 3, wherein the neural network model is further configured to analyze the online data associated with the identified faces to refine the selection of advertisements for display.

5. The system of Claim 3, wherein the system comprises one or more projector devices, and wherein the one or more servers are configured, in addition to transmitting the matched advertisements, to cause the one or more projector devices to project one or more predefined directional symbols onto a surface of the first location to direct the identified user to an advertised product based on their online data.

6. The system of Claim 5, wherein the one or more projector devices are further configured to project the matched advertisements onto a surface of the first location.

7. The system of Claim 3, wherein the system further comprises one or more store manager user devices, and wherein the one or more servers are configured, in addition to transmitting the matched advertisements, to share at least a portion of the data for the identified user profile with the one or more store manager user devices.

8. The system of Claim 7, wherein the data transmitted to the one or more store manager user devices comprises at least one or more product suggestions for the identified user profile.

9. The system of Claim 1, wherein the one or more servers are further configured to create a temporary user profile for recognized persons, said temporary user profile being stored in the one or more databases for a predetermined period.

10. The system of Claim 9, wherein the temporary user profile serves as an identifier for targeted advertising, and the duration of storage is determined by the advertiser.

11. The system of Claim 1, wherein the one or more servers are configured to operate in one of three modes: object-based targeting, facial recognition with online data analysis, and a hybrid method combining both.

12. The system of Claim 1, wherein the one or more databases further store analytics data for manufacturers and distributors, enabling the tracking of specific objects or brands.

13. The system of Claim 1, wherein the one or more camera devices and one or more display devices are integrated into a network of partners, said partners comprising entities with built-in camera TVs and entities with additional equipment with cameras.

14. The system of Claim 1, wherein the one or more camera devices are configured to transmit their video signal to the one or more servers for real-time data processing and analysis.

15. The system of Claim 1, wherein the neural network model is trained using a photo database or a ready-made trained model; and/or wherein the pre-defined criteria for object identification are set by the advertiser; and/or wherein the one or more display devices are LCD TVs or monitors situated in shopping centers, shops, or storefronts; and/or the one or more servers are configured to transmit the matched advertisements to the one or more display devices for playback in real-time upon object identification.
